# EUROPEAN PATENT APPLICATION

(11) **EP 4 804 645 A2**
(43) Date of publication of application: **09.09.2026**
(21) Application number: 26186207.2
(22) Date of filing: 11.08.2022
(51) Int. Cl.: H04W 52/02

(54) **DOWNLINK TRANSMISSION/RECEPTION PROCEDURE FOR SMALL DATA TRANSMISSIONS**

(30) Priority: 11.08.2021 US 202163232058 P
(62) Document number(s) of the earlier application(s) in accordance with Art. 76 EPC: 22773026.4 / 4 385 276
(71) Applicant: Lenovo (Singapore) Pte Limited, Singapore 556741 (SG)
(72) Inventor: LOHR, Joachim, 556741 Singapore (SG); BASU MALLICK, Prateek, 556741 Singapore (SG); CHOI, Hyung-Nam, 556741 Singapore (SG); KUCHIBHOTLA, Ravi, 556741 Singapore (SG)
(74) Representative: Openshaw & Co.

(57) **Abstract**

Apparatuses, methods, and systems are disclosed for DL transmission/reception procedure for SDTs. An apparatus (1100) includes a transceiver (1125) and a processor (1105) coupled to the transceiver (1105). The processor (1105) is configured to cause the apparatus (1100) to receive a PDSCH transmission from a network, the PDSCH transmission associated with a PDCCH transmission that is received at a preconfigured PDCCH monitoring occasion, the PDSCH comprising an SDT indicator. The processor (1105) is configured to cause the apparatus (1100) to initiate, in response to receiving the SDT indicator, an SDT procedure by transmitting, to the network, an RRC signaling message and downlink related control information on a preconfigured configured uplink grant resource.

## Description

### CROSS-REFERENCE TO RELATED APPLICATIONS

This application claims the benefit of United States Provisional Patent Application Number 63/232,058, entitled "DOWNLINK TRANSMISSION/RECEPTION PROCEDURE FOR SMALL DATA TRANSMISSIONS IN RRC_INACTIVE" and filed on August 11, 2021, for Joachim Löhr, et al., which is incorporated herein by reference.

### FIELD

The subject matter disclosed herein relates generally to wireless communications and more particularly relates to downlink ("DL") transmission/reception procedures for small data transmissions ("SDTs") in RRC_INACTIVE.

### BACKGROUND

In wireless networks, if DL SDT is not supported, the user equipment ("UE") has to resume a connection (e.g., move to RRC_CONNECTED state) for any DL data triggered transmission, e.g., mobile terminated ("MT") data. Connection setup and subsequently release to an INACTIVE state happens for each DL data transmission. However, this may result in unnecessary power consumption and signaling overhead, in particular, for cases where the network ("NW") sends small and infrequent DL data packets.

### BRIEF SUMMARY

Disclosed are solutions for DL transmission/reception procedures for SDTs in RRC_INACTIVE. The solutions may be implemented by apparatus, systems, methods, or computer program products.

In one embodiment, a first apparatus includes a transceiver and a processor coupled to the transceiver. In one embodiment, the processor is configured to cause the apparatus to receive a physical downlink shared channel ("PDSCH") transmission from a network, the PDSCH transmission associated with a physical downlink control channel ("PDCCH") transmission that is received at a preconfigured PDCCH monitoring occasion, the PDSCH comprising an SDT indicator. In one embodiment, the processor is configured to cause the apparatus to initiate, in response to receiving the SDT indicator, an SDT procedure by transmitting, to the network, a radio resource control ("RRC") signaling message and downlink related control information on a preconfigured configured uplink grant resource.

In one embodiment, a first method receives a PDSCH transmission from a network, the PDSCH transmission associated with a PDCCH transmission that is received at a preconfigured PDCCH monitoring occasion, the PDSCH comprising an SDT indicator. In one embodiment, the first method initiates, in response to receiving the SDT indicator, an SDT procedure by transmitting, to the network, an RRC signaling message and downlink related control information on a preconfigured configured uplink grant resource

In one embodiment, a second apparatus includes a transceiver and a processor coupled to the transceiver. In one embodiment, the processor is configured to cause the apparatus to transmit a PDSCH transmission to a UE, the PDSCH transmission associated with a PDCCH transmission that is received at a preconfigured PDCCH monitoring occasion, the PDSCH comprising a SDT indicator. In one embodiment, the processor is configured to cause the apparatus to receive, from the UE, an RRC signaling message and downlink related control information on a preconfigured configured uplink grant resource using an SDT procedure based on the SDT indicator

In one embodiment, the second method transmits a PDSCH transmission to a UE, the PDSCH transmission associated with a PDCCH transmission that is received at a preconfigured PDCCH monitoring occasion, the PDSCH comprising a SDT indicator. In one embodiment, the second method receives, from the UE, an RRC signaling message and downlink related control information on a preconfigured configured uplink grant resource using an SDT procedure based on the SDT indicator.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for DL transmission/reception procedure for SDTs;
Figure 2 depicts an RRC Resume Procedure;
Figure 3 depicts a procedure for random access channel ("RACH")/configured grant ("CG")-based SDT in RRC_INACTIVE;
Figure 4 depicts a procedure for RACH-SDT with subsequent data transmissions;
Figure 5 depicts a procedure for selection of SDT/non-SDT resources;
Figure 6 depicts a procedure for CG-SDT triggered by the NW for DL (MT) data;
Figure 7 depicts a procedure for RACH-SDT triggered by NW for DL (MT) data;
Figure 8 depicts an RRC-less SDT procedure triggered by NW for DL (MT) data;
Figure 9 depicts a contention-free random access ("CFRA") SDT procedure triggered by NW;
Figure 10 is a diagram illustrating one embodiment of a NR protocol stack;
Figure 11 is a block diagram illustrating one embodiment of a user equipment apparatus that may be used for DL transmission/reception procedures for SDTs;
Figure 12 is a block diagram illustrating one embodiment of a network apparatus that may be used for DL transmission/reception procedures for SDTs;
Figure 13 is a flowchart diagram illustrating one embodiment of a method for DL transmission/reception procedures for SDTs;
Figure 14 is a flowchart diagram illustrating one embodiment of a method for DL transmission/reception procedures for SDTs.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects.

For example, the disclosed embodiments may be implemented as a hardware circuit comprising custom very-large-scale integration ("VLSI") circuits or gate arrays, off-the-shelf semiconductors such as logic chips, transistors, or other discrete components. The disclosed embodiments may also be implemented in programmable hardware devices such as field programmable gate arrays, programmable array logic, programmable logic devices, or the like. As another example, the disclosed embodiments may include one or more physical or logical blocks of executable code which may, for instance, be organized as an object, procedure, or function.

Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN"), wireless LAN ("WLAN"), or a wide area network ("WAN"), or the connection may be made to an external computer (for example, through the Internet using an Internet Service Provider ("ISP")).

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

The code may also be stored in a storage device that can direct a computer, other programmable data processing apparatus, or other devices to function in a particular manner, such that the instructions stored in the storage device produce an article of manufacture including instructions which implement the function/act specified in the flowchart diagrams and/or block diagrams.

The code may also be loaded onto a computer, other programmable data processing apparatus, or other devices to cause a series of operational steps to be performed on the computer, other programmable apparatus, or other devices to produce a computer implemented process such that the code which execute on the computer or other programmable apparatus provide processes for implementing the functions/acts specified in the flowchart diagrams and/or block diagrams.

The flowchart diagrams and/or block diagrams in the Figures illustrate the architecture, functionality, and operation of possible implementations of apparatuses, systems, methods, and program products according to various embodiments. In this regard, each block in the flowchart diagrams and/or block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

Generally, the present disclosure describes systems, methods, and apparatuses for DL transmission/reception procedures for SDTs. In certain embodiments, the methods may be performed using computer code embedded on a computer-readable medium. In certain embodiments, an apparatus or system may include a computer-readable medium containing computer-readable code which, when executed by a processor, causes the apparatus or system to perform at least a portion of the below described solutions.

Since DL SDT is not supported in Rel-17, the UE has to resume the connection (e.g., move to RRC_CONNECTED state) for any DL data triggered transmission. Connection setup and subsequently release to INACTIVE state happens for each downlink data transmission. However, this may result in unnecessary power consumption and signaling overhead in particular for cases where NW sends small and infrequent DL data packets.

NR supports RRC_INACTIVE state and UEs with infrequent (periodic and/or non-periodic) data transmission are generally maintained by the network in the RRC_INACTIVE state. However until Rel-17, the RRC_INACTIVE state doesn't support the transmission of data. Hence, the UE has to resume the connection with the network (e.g., move to RRC_CONNECTED state) for any DL (e.g., MT) and UL (e.g., mobile originated ("MO")) data. Connection setup and subsequent release to RRC_INACTIVE state happens for each data transmission however small and infrequent the data packets are.

As described in more detail below, a network entity, e.g. gNB, triggers an SDT procedure to transmit downlink data to a UE in RRC_INACTIVE. The NW triggers the uplink ("UL") SDT procedure, e.g., as specified in Rel-17, to transmit DL data to a UE in RRC_INACTIVE state. In one example, the NW triggers the UL SDT procedure for the purpose of DL transmission (MT) by means of a downlink message, e.g. paging message.

In a conventional solution to the problem above, the NW pages the UE and the UE, in response to receiving the paging, triggers the legacy *RRCResume* procedure. The NW may respond to the *RRCResumeRequest* message (msg3) with an *RRCRelease* message (with Suspend config) (msg4), which could also contain some DL data. However, such a solution is not efficient because it doesn't allow further DL data to be scheduled (apart from the DL data in Msg4) and also doesn't support using the CG-SDT resources for initiating the DL SDT procedure.

In one embodiment described herein, a network entity such as e.g., a gNB triggers an SDT procedure to transmit downlink data to a UE in RRC_INACTIVE. The NW triggers the UL SDT procedure, e.g., as specified in Rel-17, to transmit DL data to a UE in RRC_INACTIVE. In one example, the NW triggers the UL SDT procedure for the purpose of DL transmission (MT) by means of a downlink message, e.g., paging message of SDT triggering message. The UE initiates the SDT procedure even though there is no uplink data available for transmission in the UE's buffer.

In another embodiment, a network entity such as e.g., gNB triggers a CFRA RACH-based SDT procedure to transmit downlink data to a UE in RRC_INACTIVE state. The NW triggers the CFRA SDT procedure to transmit DL data to a UE in RRC_INACTIVE state. In one example, the NW triggers the CFRA SDT procedure for the purpose of DL transmission (MT) by means of a downlink message, e.g., paging message containing a dedicated preamble or PDCCH containing a dedicated preamble.

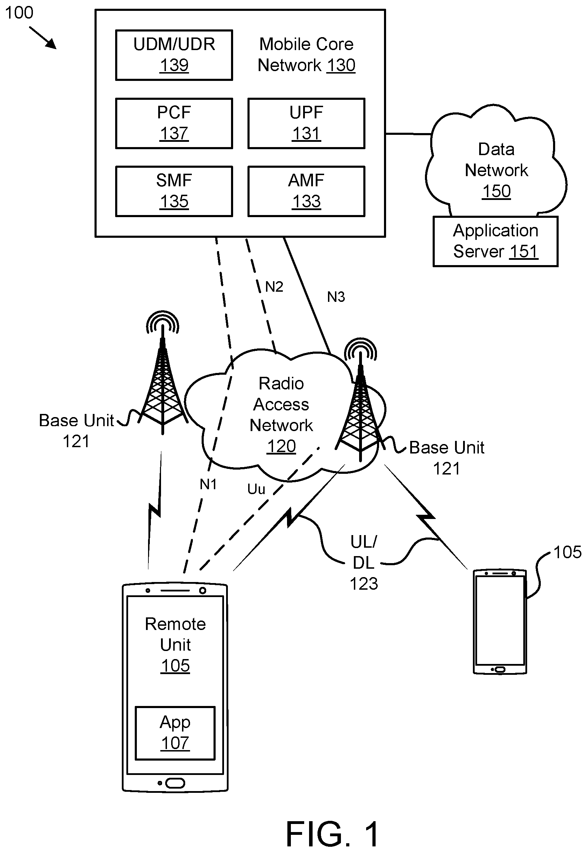

Figure 1 depicts a wireless communication system 100 supporting DL transmission/reception procedures for SDTs, according to embodiments of the disclosure. In one embodiment, the wireless communication system 100 includes at least one remote unit 105, a radio access network ("RAN") 120, and a mobile core network 130. The RAN 120 and the mobile core network 130 form a mobile communication network. The RAN 120 may be composed of a base unit 121 with which the remote unit 105 communicates using wireless communication links 115. Even though a specific number of remote units 105, base units 121, wireless communication links 115, RANs 120, and mobile core networks 130 are depicted in Figure 1, one of skill in the art will recognize that any number of remote units 105, base units 121, wireless communication links 115, RANs 120, and mobile core networks 130 may be included in the wireless communication system 100.

In one implementation, the RAN 120 is compliant with the 5G system specified in the Third Generation Partnership Project ("3GPP") specifications. For example, the RAN 120 may be a New Generation Radio Access Network ("NG-RAN"), implementing NR RAT and/or 3GPP Long-Term Evolution ("LTE") RAT. In another example, the RAN 120 may include non-3GPP RAT (e.g., Wi-Fi^{®} or Institute of Electrical and Electronics Engineers ("IEEE") 802.11-family compliant WLAN). In another implementation, the RAN 120 is compliant with the LTE system specified in the 3GPP specifications. More generally, however, the wireless communication system 100 may implement some other open or proprietary communication network, for example Worldwide Interoperability for Microwave Access ("WiMAX") or IEEE 802.16-family standards, among other networks. The present disclosure is not intended to be limited to the implementation of any particular wireless communication system architecture or protocol.

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as the UEs, subscriber units, mobiles, mobile stations, users, terminals, mobile terminals, fixed terminals, subscriber stations, user terminals, wireless transmit/receive unit ("WTRU"), a device, or by other terminology used in the art. In various embodiments, the remote unit 105 includes a subscriber identity and/or identification module ("SIM") and the mobile equipment ("ME") providing mobile termination functions (e.g., radio transmission, handover, speech encoding and decoding, error detection and correction, signaling and access to the SIM). In certain embodiments, the remote unit 105 may include a terminal equipment ("TE") and/or be embedded in an appliance or device (e.g., a computing device, as described above).

The remote units 105 may communicate directly with one or more of the base units 121 in the RAN 120 via uplink ("UL") and downlink ("DL") communication signals. Furthermore, the UL and DL communication signals may be carried over the wireless communication links 123. Here, the RAN 120 is an intermediate network that provides the remote units 105 with access to the mobile core network 130.

In some embodiments, the remote units 105 communicate with an application server via a network connection with the mobile core network 130. For example, an application 107 (e.g., web browser, media client, telephone and/or Voice-over-Internet-Protocol ("VoIP") application) in a remote unit 105 may trigger the remote unit 105 to establish a protocol data unit ("PDU") session (or other data connection) with the mobile core network 130 via the RAN 120. The mobile core network 130 then relays traffic between the remote unit 105 and the application server (e.g., the content server 151 in the packet data network 150) using the PDU session. The PDU session represents a logical connection between the remote unit 105 and the User Plane Function ("UPF") 131.

To establish the PDU session (or PDN connection), the remote unit 105 must be registered with the mobile core network 130 (also referred to as '"attached to the mobile core network" in the context of a Fourth Generation ("4G") system). Note that the remote unit 105 may establish one or more PDU sessions (or other data connections) with the mobile core network 130. As such, the remote unit 105 may have at least one PDU session for communicating with the packet data network 150, e.g., representative of the Internet. The remote unit 105 may establish additional PDU sessions for communicating with other data networks and/or other communication peers.

In the context of a 5G system ("5GS"), the term "PDU Session" a data connection that provides end-to-end ("E2E") user plane ("UP") connectivity between the remote unit 105 and a specific Data Network ("DN") through the UPF 131. A PDU Session supports one or more Quality of Service ("QoS") Flows. In certain embodiments, there may be a one-to-one mapping between a QoS Flow and a QoS profile, such that all packets belonging to a specific QoS Flow have the same 5G QoS Identifier ("5QI").

In the context of a 4G/LTE system, such as the Evolved Packet System ("EPS"), a Packet Data Network ("PDN") connection (also referred to as EPS session) provides E2E UP connectivity between the remote unit and a PDN. The PDN connectivity procedure establishes an EPS Bearer, i.e., a tunnel between the remote unit 105 and a Packet Gateway ("PGW", not shown) in the mobile core network 130. In certain embodiments, there is a one-to-one mapping between an EPS Bearer and a QoS profile, such that all packets belonging to a specific EPS Bearer have the same QoS Class Identifier ("QCI").

The base units 121 may be distributed over a geographic region. In certain embodiments, a base unit 121 may also be referred to as an access terminal, an access point, a base, a base station, a Node-B ("NB"), an Evolved Node B (abbreviated as eNodeB or "eNB," also known as Evolved Universal Terrestrial Radio Access Network ("E-UTRAN") Node B), a 5G/NR Node B ("gNB"), a Home Node-B, a relay node, a RAN node, or by any other terminology used in the art. The base units 121 are generally part of a RAN, such as the RAN 120, that may include one or more controllers communicably coupled to one or more corresponding base units 121. These and other elements of radio access network are not illustrated but are well known generally by those having ordinary skill in the art. The base units 121 connect to the mobile core network 130 via the RAN 120.

The base units 121 may serve a number of remote units 105 within a serving area, for example, a cell or a cell sector, via a wireless communication link 123. The base units 121 may communicate directly with one or more of the remote units 105 via communication signals. Generally, the base units 121 transmit DL communication signals to serve the remote units 105 in the time, frequency, and/or spatial domain. Furthermore, the DL communication signals may be carried over the wireless communication links 123. The wireless communication links 123 may be any suitable carrier in licensed or unlicensed radio spectrum. The wireless communication links 123 facilitate communication between one or more of the remote units 105 and/or one or more of the base units 121. Note that during NR-U operation, the base unit 121 and the remote unit 105 communicate over unlicensed radio spectrum.

In one embodiment, the mobile core network 130 is a 5GC or an Evolved Packet Core ("EPC"), which may be coupled to a packet data network 150, like the Internet and private data networks, among other data networks. A remote unit 105 may have a subscription or other account with the mobile core network 130. Each mobile core network 130 belongs to a single public land mobile network ("PLMN"). The present disclosure is not intended to be limited to the implementation of any particular wireless communication system architecture or protocol.

The mobile core network 130 includes several network functions ("NFs"). As depicted, the mobile core network 130 includes at least one UPF 131. The mobile core network 130 also includes multiple control plane ("CP") functions including, but not limited to, an Access and Mobility Management Function ("AMF") 133 that serves the RAN 120, a Session Management Function ("SMF") 135, a Network Exposure Function ("NEF"), a Policy Control Function ("PCF") 137, a Unified Data Management function ("UDM") and a User Data Repository ("UDR").

The UPF(s) 131 is responsible for packet routing and forwarding, packet inspection, QoS handling, and external PDU session for interconnecting Data Network ("DN"), in the 5G architecture. The AMF 133 is responsible for termination of NAS signaling, NAS ciphering & integrity protection, registration management, connection management, mobility management, access authentication and authorization, security context management. The SMF 135 is responsible for session management (i.e., session establishment, modification, release), remote unit (i.e., UE) IP address allocation & management, DL data notification, and traffic steering configuration for UPF for proper traffic routing.

The NEF is responsible for making network data and resources easily accessible to customers and network partners. Service providers may activate new capabilities and expose them through APIs. These APIs allow third-party authorized applications to monitor and configure the network's behavior for a number of different subscribers (i.e., connected devices with different applications). The PCF 137 is responsible for unified policy framework, providing policy rules to CP functions, access subscription information for policy decisions in UDR.

The UDM is responsible for generation of Authentication and Key Agreement ("AKA") credentials, user identification handling, access authorization, subscription management. The UDR is a repository of subscriber information and can be used to service a number of network functions. For example, the UDR may store subscription data, policy-related data, subscriber-related data that is permitted to be exposed to third party applications, and the like. In some embodiments, the UDM is co-located with the UDR, depicted as combined entity "UDM/UDR" 139.

In various embodiments, the mobile core network 130 may also include an Authentication Server Function ("AUSF") (which acts as an authentication server), a Network Repository Function ("NRF") (which provides NF service registration and discovery, enabling NFs to identify appropriate services in one another and communicate with each other over Application Programming Interfaces ("APIs")), or other NFs defined for the 5GC. In certain embodiments, the mobile core network 130 may include an authentication, authorization, and accounting ("AAA") server.

In various embodiments, the mobile core network 130 supports different types of mobile data connections and different types of network slices, wherein each mobile data connection utilizes a specific network slice. Here, a "network slice" refers to a portion of the mobile core network 130 optimized for a certain traffic type or communication service. A network instance may be identified by a single-network slice selection assistance information ("S-NSSAI,") while a set of network slices for which the remote unit 105 is authorized to use is identified by network slice selection assistance information ("NSSAI").

Here, "NSSAI" refers to a vector value including one or more S-NSSAI values. In certain embodiments, the various network slices may include separate instances of network functions, such as the SMF 135 and UPF 131. In some embodiments, the different network slices may share some common network functions, such as the AMF 133. The different network slices are not shown in Figure 1 for ease of illustration, but their support is assumed. Where different network slices are deployed, the mobile core network 130 may include a Network Slice Selection Function ("NSSF") which is responsible for selecting of the Network Slice instances to serve the remote unit 105, determining the allowed NSSAI, determining the AMF set to be used to serve the remote unit 105.

Although specific numbers and types of network functions are depicted in Figure 1, one of skill in the art will recognize that any number and type of network functions may be included in the mobile core network 130. Moreover, in an LTE variant where the mobile core network 130 comprises an EPC, the depicted network functions may be replaced with appropriate EPC entities, such as a Mobility Management Entity ("MME"), a Serving Gateway ("SGW"), a PGW, a Home Subscriber Server ("HSS"), and the like. For example, the AMF 133 may be mapped to an MME, the SMF 135 may be mapped to a control plane portion of a PGW and/or to an MME, the UPF 131 may be mapped to an SGW and a user plane portion of the PGW, the UDM/UDR 139 may be mapped to an HSS, etc.

While Figure 1 depicts components of a 5G RAN and a 5G core network, the described embodiments apply to other types of communication networks and RATs, including IEEE 802.11 variants, Global System for Mobile Communications ("GSM", i.e., a 2G digital cellular network), General Packet Radio Service ("GPRS"), UMTS, LTE variants, CDMA 2000, Bluetooth, ZigBee, Sigfox, and the like.

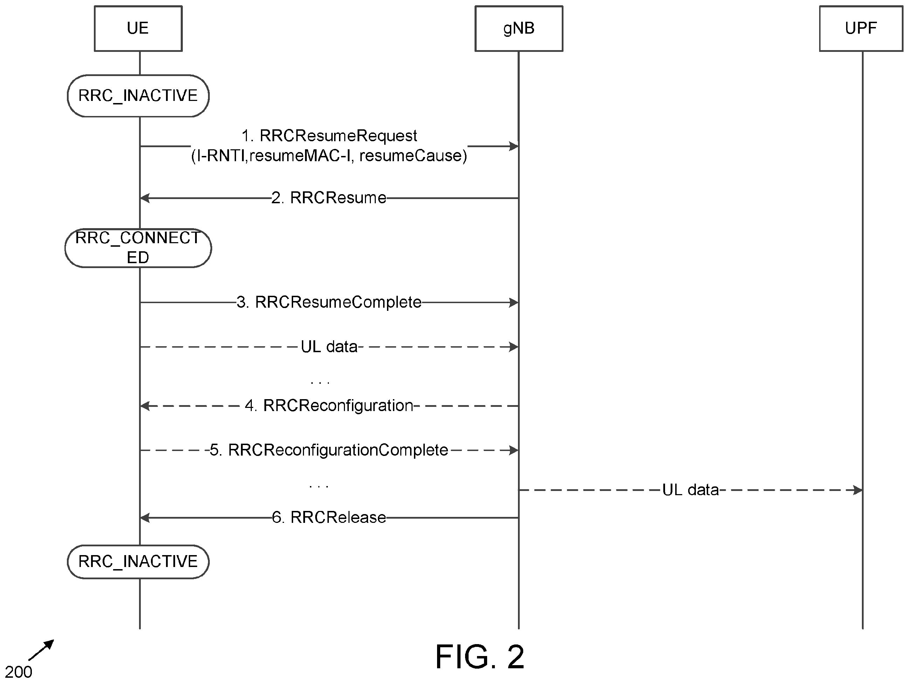

As background, NR supports RRC_INACTIVE state and UEs with infrequent (periodic and/or non-periodic) data transmission are generally maintained by the network in the RRC_INACTIVE state. However up to Rel-17, the RRC_INACTIVE state doesn't support the transmission of data. Hence, the UE has to resume the connection with the network (e.g., move to an RRC_CONNECTED state) for any DL (MT) and UL (MO) data as shown in Figure 2. Connection setup and subsequent release to RRC_INACTIVE state happens for each data transmission however small and infrequent the data packets are.

This results in unnecessary power consumption and signaling overhead. Therefore, a Work Item has been agreed for Rel-17 where small data transmissions are supported in RRC_INACTIVE state.

The following objectives are part of the 3GPP Rel-17 Work Item on NR small data transmissions in INACTIVE state:
a. For the RRC_INACTIVE state:
   i. UL small data transmissions for RACH-based schemes (i.e., 2-step and 4-step RACH):
      1. General procedure to enable UP data transmission for small data packets from INACTIVE state (e.g., using MSGA or MSG3)
      2. Enable flexible payload sizes larger than the Rel-16 common control channel ("CCCH") message size that is possible currently for INACTIVE state for MSGA and MSG3 to support UP data transmission in UL (actual payload size can be up to network configuration)
      3. Context fetch and data forwarding (with and without anchor relocation) in INACTIVE state for RACH-based solutions
         Note 1: The security aspects of the above solutions should be checked with SA3
   ii. Transmission of UL data on pre-configured physical uplink shared channel ("PUSCH") resources (e.g., reusing the configured grant type 1) - when timing advance ("TA") is valid
      1. General procedure for small data transmission over configured grant type 1 resources from INACTIVE state
      2. Configuration of the configured grant type1 resources for small data transmission in UL for INACTIVE state
   iii. Specify radio resource management ("RRM") core requirements for small data transmission in RRC_INACTIVE, if needed

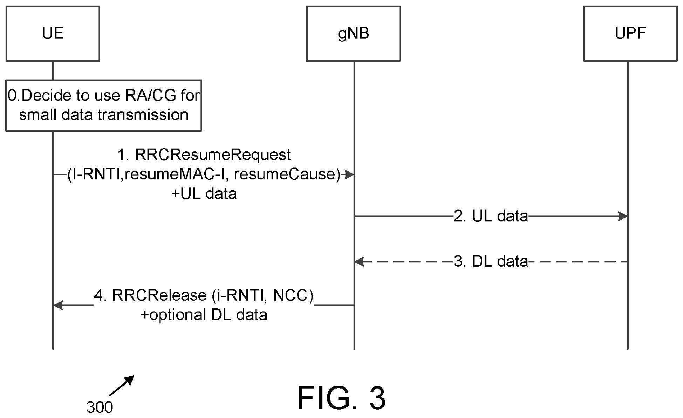

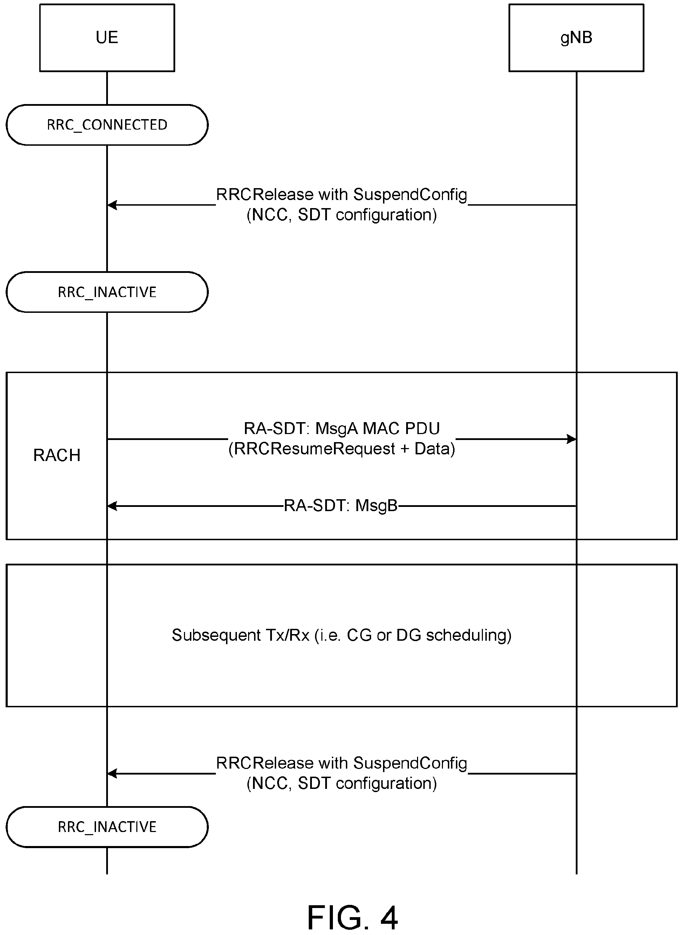

Some exemplary SDT procedures in RRC_INACTIVE according to current Rel-17 discussions is shown in Figures 3 and 4.

In Rel-17 only MO-triggered SDT is specified as per the work item description. Essentially, SDT procedures can be only triggered by UL data occurring in the mobile. As shown in Figure 4, DL data transmissions may be provided as part of an ongoing SDT procedure that was initiated by the UE (UL data), e.g., during the subsequent data transmission.

Thus, because DL SDT is not supported in Rel-17, the UE has to resume the connection with the network (e.g., move to RRC_CONNECTED state) for any DL data triggered transmission (MT). Connection setup and subsequent release to RRC_INACTIVE state happens for each downlink data transmission. However, this may result in unnecessary power consumption and signaling overhead in particular for cases where NW sends small and infrequent DL data packets. Therefore, it would be beneficial to send (small) DL data to the UE without requiring the UE to transit to RRC_CONNECTED state.

The subject matter herein provides several solutions as described in the various embodiments that allow the transmission of (small) (MT) downlink data to the UE within an RRC_INACTIVE state, e.g., without requiring the UE to transit to the RRC_CONNECTED state.

In one embodiment, for small data, for RACH and CG based solutions when the UE receives RRC release with Suspend config, the UE at least performs the following actions:
i. Medium access control ("MAC") is reset, and default MAC cell group configuration is released
ii. Radio link control ("RLC") entities for SRB1 are re-established
iii. Signaling radio bearers ("SRBs") and data radio bearers ("DRBs") are suspended except SRB0

In one embodiment, for both RACH and CG based solutions, upon initiating RESUME procedures for SDT initiation (e.g., for first SDT transmission), the UE shall re-establish at least the SDT packet data convergence protocol ("PDCP") entities and resume the SDT DRBs that are configured for small data transmission (along with the SRB1).

In one embodiment, the first UL message (e.g., MSG3 for 4-step RACH, MSGA payload for 2-step RACH and the CG transmission for CG) may contain at least the following contents (depending on the size of the message):
i. CCCH message
ii. LCP can be used to determine to priority of the content below that may be included
iii. DRB data from one or more DRBs which are configured by the network for small data transmission
iv. MAC CEs - (e.g., BSR).
v. Padding bits

In one embodiment, for RACH and CG, the existing unified access control ("UAC") procedure to determine whether access attempt is allowed, will be reused for SDT.

In one embodiment, SDT is transparent to NAS layer (e.g., NAS generates one of the existing resume causes and AS decides SDT vs non-SDT access).

In one embodiment, in case of an RRC-based solution, for both RACH and CG based solutions, the CCCH message contains ResumeMAC-I generated using the stored security key for RRC integrity protection.

In one embodiment, for both RACH and CG based solutions, new keys are generated using the stored security context and the NCC value received in the previous RRCRelease message, and these new keys are used for generating the data of DRBs that are configured for SDT.

In one embodiment, for RACH based solutions, upon successful completion of contention resolution, the UE shall monitor the cell radio network temporary identifier ("C-RNTI").

In one embodiment, as a baseline, the RACH resource, e.g., (RO+preamble combination) is different between SDT and non-SDT
i. If ROs for SDT and non SDT are different, preamble partitioning between SDT and non SDT is not needed.
ii. If ROs for SDT and non SDT are same, preamble partitioning is needed.

In one embodiment, if the RACH resource e.g., (RO+preamble combination) is different between SDT and non-SDT, then there is no further need for any differentiation between MSG2/MSGB for SDT vs non-SDT.

In one embodiment, the configuration of configured grant resources for UE uplink small data transfer is contained in the RRCRelease message.

In one embodiment, the configuration of configured grant resource can include one type 1 CG configuration.

In one embodiment, a new TA timer for TA maintenance specified for configured grant based small data transfer in RRC_INACTIVE should be introduced. The TA timer is configured together with the CG configuration in the RRCRelease message.

In one embodiment, the configuration of configured grant resources for UE small data transmission is valid only in the same serving cell.

In one embodiment, the UE can use configured grant based small data transfer if at least the following criteria is fulfilled: (1) user data is smaller than the data volume threshold; (2) configured grant resource is configured and valid; and (3) UE has valid TA.

In one embodiment, from RAN2 point of view, an association between CG resources and SSBs is required for CG-based SDT.

In one embodiment, a synchronization signal reference signal received power ("SS-RSRP") threshold is configured for SSB selection. UE selects one of the SSB with SS-RSRP above the threshold and selects the associated CG resource for UL data transmission.

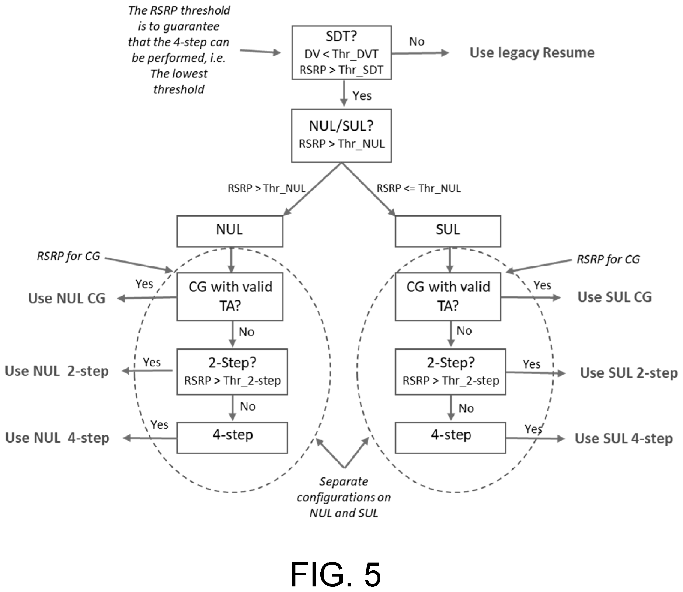

Some exemplary procedures for the selection of SDT resources, e.g., UE determines whether to use CG-SDT or RACH SDT or non-SDT, based on data volume and RSRP values is shown in Figure 5.

According to a first embodiment, a network entity such as e.g., a gNB triggers an SDT procedure to transmit downlink data to a UE in RRC_INACTIVE. According to one implementation of the embodiment, the NW triggers the UL SDT procedure, e.g., as specified in Rel-17, in order to transmit DL data to a UE in RRC_INACTIVE. In one example, the NW triggers the UL SDT procedure for the purpose of DL transmission (MT) by means of a downlink message.

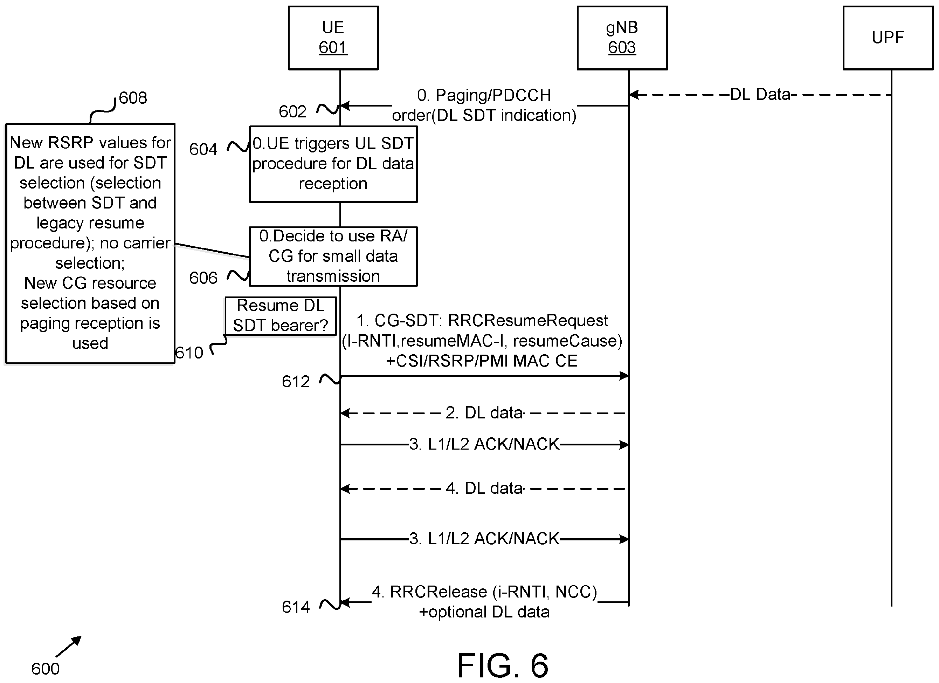

According to one implementation of the embodiment, shown in the procedure in Figure 6, the NW 603 sends a paging message (see messaging 602) to indicate to the UE 601 to trigger/start the SDT procedure for the purpose of DL (MT) data, e.g. DCI format 1_0 with P-RNTI and corresponding PDSCH. In one example the paging message (e.g., PDSCH), e.g., paging record, includes some information that instructs the UE 601 to start the (UL) SDT procedure to receive some DL (MT) data in RRC_INACTIVE.

According to one implementation, the paging message includes information indicating whether the UE 601 shall trigger the CG-SDT or RACH -SDT procedure. Based on this new indication which could be e.g., a one-bit flag, a UE in RRC_INACTIVE triggers an SDT procedure rather than triggering e.g., a legacy RRC Resume procedure. In another example a new downlink message is used to trigger SDT procedure for the purpose of DL (MT) data transmission. This new message may be sent on the legacy paging occasions ("PO") determined for a UE 601 based on the formula as specified in TS38.304, which is incorporated herein by reference in its entirety. It should be noted that the UE 601 monitors one PO per discontinuous reception ("DRX") cycle. A PO, in one embodiment, is a set of PDCCH monitoring occasions and can consist of multiple time slots (e.g., subframe or orthogonal frequency division multiplexing ("OFDM") symbols) where a paging DCI, e.g., DCI format 1_0 with P-RNTI can be sent.

In one embodiment, one Paging Frame ("PF") is one Radio Frame and may contain one or multiple PO(s) or starting point of a PO. In one example the new message may be a PDCCH addressed to the C-RNTI. A new DCI format may be used for the new message transmission. In another example the new message may be a PDSCH scheduled by a DCI (PDCCH) addressed to the e.g. C-RNTI of the UE 601, which should trigger UL SDT procedure for the purpose of DL (MT) data transmission/reception. According to another implementation of the embodiment the new message (SDT order) is sent on predefined PDCCH monitoring occasions that are configured to the UE 601 while being in RRC_CONNECTED, e.g., PDCCH monitoring occasions configuration is sent in the RRCRelease message (with SuspendConfig) when the UE 601 is sent to RRC_INACTIVE state. According to one specific implementation of the embodiment, the DL message that instructs the UE 601 to trigger (UL) SDT procedures for the purpose of DL (MT) data transmission includes some DL data.

Upon reception of the SDT ordering/triggering indication, e.g., received within the paging message, the UE 601 shall initiate the (UL) SDT procedure (see block 604) even though the UE 601 may not have any UL data in the UE buffer (virtual UL SDT procedure). Following the legacy SDT resource selection procedure as defined for Rel-17, the UE 601 may determine, based on a data volume threshold and some RSRP thresholds (see block 608), whether to select the CG-SDT procedure or RACH-SDT procedure (see block 606) or even select the legacy RRCResume procedure (transit to RRC_CONNECTED state and perform data transmission in CONNECTED state).

One example of an SDT resource selection procedure is shown in Figure 5. According to one implementation of this embodiment, the UE applies different RSRP thresholds for the SDT resource procedure for cases when the SDT procedure has been triggered to receive some DL (MT) data in RRC_INACTIVE. For Rel-17 the RSRP thresholds, e.g., RSRP threshold to determine whether to perform SDT procedure or legacy RRCResume procedure, were introduced to ensure that there is a likelihood that the UL transmissions are successfully transmitted by the UE, e.g., only UEs in good geometry/channel conditions are allowed to perform SDT procedure where larger TB sizes are transmitted in the UL. In one embodiment, the motivation to use different RSRP thresholds compared to Rel-17 is that the SDT procedure is triggered for the purpose of DL (MT) data. Therefore, the UE doesn't have higher layer user data that requires the transmission of larger TB sizes in the UL. According to one implementation of the embodiment, the RSRP threshold(s) that are applied by the UE for an SDT procedure triggered by the NW are either signaled within the RRCRelease message or broadcast in the cell.

According to one further implementation of the embodiment, the UE may not perform a carrier selection for cases when the SDT procedure was triggered by the NW, e.g., paging or PDDCH order. The UE may only consider the normal UL ("NUL") carrier for the SDT resource selection, since the SDT procedure was triggered for purposes of DL (MT) data transmission. Therefore, any potential SDT related configurations on a supplemental UL ("SUL") carrier don't need to be considered for the SDT resource selection step/procedure.

According to one implementation of the embodiment, the UE 601 selects (see block 608) the CG-SDT resources that are mapped to the beam/SSB on which the SDT triggering message was received. In Rel-17 SDT procedure, an association between CG resources (used for CG-SDT) and SSBs has been introduced. The idea is that the UE 601 checks during the SDT initiation stage (SDT resource selection procedure) if at least one of the SSB's RSRP is above a configured threshold to determine if at least one of the SSB is qualified to be selected for CG transmission. The association between SSB and CG resource is configured to indicate to gNB on what SSB/beam to schedule the UE for further transmissions, e.g., similar to the SSB to RO mapping.

In Rel-17, in the SDT initiation stage, if none of the SSBs is qualified to be selected for CG transmission, the UE 601 is not allowed to transmit any small data on the CG resource. If CG-SDT criteria are not met, the UE 601 should further check the RA-SDT criteria to evaluate whether the criteria of RA-SDT could be met or not. According to one implementation of the embodiment, the UE 601 doesn't need to perform the SSB's RSRP comparison (CG-SDT criteria) against the preconfigured threshold, but instead selects the CG resources (when CG-SDT is selected by UE based on TA validity for example), which are associated with the SSB/beam on which the SDT triggering message, e.g., paging message or PDCCH order, was received.

One exemplary CG-SDT procedure triggered by the NW 603, e.g., the UE 601 determined to use CG-SDT procedure in response to receiving the NW SDT triggering message, is shown in Figure 6.

As shown in the Figure 6 and according to one implementation of the embodiment, the UE 601 transmits (see messaging 612) on the selected CG resources, e.g., the UE 601 determines to perform CG-SDT procedure (see block 606) based on the SDT resource selection procedure as described above (see block 606), the *RRCResumeRequest* message (CCCH). In one example, the UE 601 transmits, in addition to the *RRCResumeRequest* message, some channel state information ("CSI") and/or RSRP information, e.g., RSRP of pathloss reference, and/or beam related information on the selected CG resources. Since UE 601 has no UL data available for transmission in its buffer, the UE 601 multiplexes some DL related control information which supports link adaptation/scheduling functionality in the NW 603. In one example the CSI information and/or RSRP info and/or beam information is transmitted within a new MAC CE.

According to one implementation of the embodiment, the UE 601 sets the *ResumeCause* for the *RRCResumeRequest* message to *mt-Access* for cases when the (UL) SDT procedure was triggered by the NW for DL (MT) data. Alternatively, a new *ResumeCause* value is introduced which indicates that the SDT procedure was triggered by NW.

According to one further implementation of the embodiment, NW 603 configures which bearers (see block 610) to resume upon initiation of a SDT procedure which was triggered by NW 603 for DL (MT) data transmission. In Rel-17 for both RACH and CG based SDT procedure, upon initiating RESUME procedure for SDT initiation (e.g., for first SDT transmission), the UE re-establishes at least the SDT PDCP entities and resumes the SDT DRBs that are configured for small data transmission. According to this embodiment, the NW 603 may configure a different set of DRBs which UE 601 shall resume for DL SDT, i.e., SDT procedure triggered by NW 603 for DL (MT), and Rel-17 SDT for UL (MO). In one example NW 603 configures for each radio bearer/logical channel the type of SDT bearer, i.e., UL SDT or DL SDT or both. Based on this configuration, UE 601 is aware of which DRBs to resume upon initiation of the SDT procedure.

According to a further aspect of the embodiment, the UE 601 doesn't report buffer status information ("BSR") and/or power headroom ("PHR") information to the NW 603 during an SDT procedure for cases when the SDT procedure was triggered by the NW for the purpose of DL (MT) data. Even though UE 601 may be configured with a BSR and/or PHR configuration, e.g., BSR related timers and/or PHR related threshold/timers, the UE 601 doesn't apply the configurations when the SDT procedure was triggered by NW 603. In one example the UE 601 may be configured with a CSI reporting configuration, e.g., periodic CSI reporting, and/or RSRP/beam information configuration. Such configuration may be provided in the *RRCRelease* message (see messaging 614).

According to one implementation of the embodiment, the UE 601 autonomously deactivates the configured CG-SDT resources upon having successfully transmitted the *RRCResumeRequest* message on the CG resources for cases that the SDT procedure was triggered by the NW 603 for DL (MT) data. Since the UE 601 has no uplink data available for transmission, there is no point in keeping the configured CG-SDT resources.

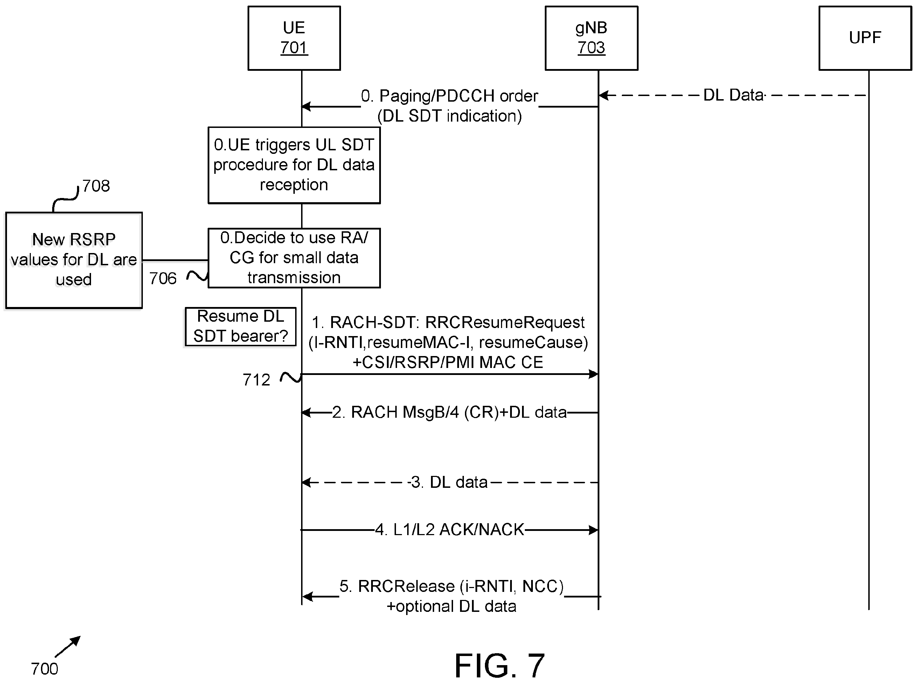

Figure 7 depicts one example RACH-SDT procedure triggered by the NW, i.e., UE determined to use RACH-SDT procedure (2-step or 4-step RACH-SDT procedure) in response to receiving the NW SDT triggering message, is shown in Figure 7.

As shown in the Figure 7, and according to one implementation of the embodiment, the UE 701 transmits (see messaging 712) in the RACH Msg3 (4-step RACH) or MsgA (2-step RACH), e.g., the UE 701 determined to perform RACH-SDT procedure (see block 706) based on the SDT resource selection procedure (see block 708) as described above, the *RRCResumeRequest* message (CCCH). In one example, the UE 701 transmits in addition to the *RRCResumeRequest* message some CSI and/or RSRP information, e.g., RSRP of pathloss reference, and/or beam related information on the selected CG resources. Since the UE 701 has no UL data available for transmission in its buffer, the UE 701 multiplexes some DL related control information that supports link adaptation/scheduling functionality in the NW 703. In one example, the CSI information and/or the RSRP info and/or beam information is transmitted within a MAC CE.

As described above also for a RACH based SDT procedure triggered by the NW 703, the different embodiments/implementations are applicable.

According to one embodiment, a new MAC CE is used to signal HARQ feedback information for DL transmissions in the UL. According to one implementation of the embodiment, the UE generates, during an SDT procedure in response to receiving a PDSCH transmission and decoding such PDSCH, a MAC CE indicating either the successful reception of the PDSCH transmission or the indicating the unsuccessful decoding of the PDSCH. The PUSCH resources for the transmission of the HARQ feedback information, e.g., MAC CE, may be pre-allocated or dynamically assigned by the NW. In one example, PUSCH resources for the transmission of the HARQ feedback MAC CE may be implicitly allocated a certain predefined offset after PDSCH transmission. The PRBs and/or MCS/TBS may be preconfigured. According to another embodiment, the UE is provided with PUCCH resources, e.g., for HARQ ACK/NACK, in the *RRCRelease* message (with suspend config) when the UE is released to RRC_INACTIVE. In one implementation, the UE activates/uses those PUCCH resources in response to initiating an SDT that was triggered by the NW.

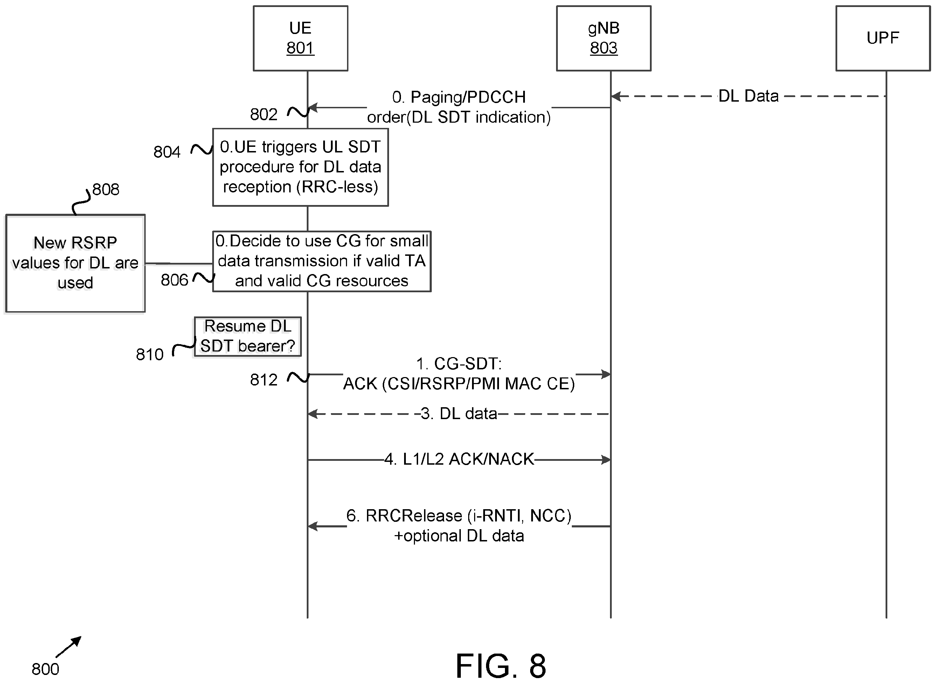

As shown in Figure 8, according to a further embodiment, a network entity such as e.g., a gNB 803 triggers an RRC-less SDT procedure to transmit downlink data to a UE 801 in RRC_INACTIVE state. According to one implementation of the embodiment, the NW 803 triggers the UL RRC-less SDT procedure to transmit DL data to a UE 801 in RRC_INACTIVE state. In one example, the NW 803 triggers the UL SDT procedure for the purpose of DL transmission (MT) by means of a downlink message. The term "RRC-less" SDT, as used herein, may refer to the case where the UE 801 doesn't transmit a *RRCResumeRequest* message at the initiation of the SDT procedure.

According to one implementation of the embodiment, the NW 803 sends a paging message (see messaging 802) to indicate to the UE 801 to trigger/start the SDT procedure for the purpose of DL (MT) data, e.g., DCI format 1_0 with P-RNTI and corresponding PDSCH. In one example the paging message (PDSCH), e.g., paging record, includes some information that instructs the UE to start the (UL) RRC-less SDT procedure to receive some DL (MT) data in RRC_INACTIVE state. In another example, a new downlink message is used to trigger (see block 804) RRC-less SDT procedure for the purpose of DL (MT) data transmission.

As described in the previous embodiment, the UE 801 may apply a different CG-SDT resource selection behavior for cases when the SDT procedure is triggered by the NW 803, e.g., the UE 801 selects the CG-SDT resources that are mapped to the beam/SSB on which the SDT triggering message was received (see block 806). The assumption for this embodiment is that the UE 801 has been provided with CG resources for SDT, e.g., in *RRCRelease* message, and the UE 801 has some valid UL TA.

As shown in the Figure 8, and according to one implementation of the embodiment, the UE 801 transmits (see messaging 812) on the selected CG resources, e.g., the UE 801 determined (see block 806) to perform CG-SDT procedure based on the SDT resource selection procedure (see block 808) as described above, some uplink message which acknowledges the reception of the SDT trigger message, e.g., paging message. In one example, the UE 801 transmits (see messaging 812) some CSI and/or RSRP information, e.g., RSRP of pathloss reference, and/or beam related information on the selected CG resources to acknowledge the reception of the SDT trigger message as well as to provide some DL related control information which are used by the NW for link adaptation and DL scheduling. In one example the CSI information and/or RSRP info and/or beam information is transmitted within a MAC CE.

As described for the first embodiment, the NW 803 may configure (see block 810) which bearers to resume upon initiation of a SDT procedure which was triggered by NW for DL (MT) data transmission. In Rel-17 for both RACH and CG based SDT procedure, upon initiating RESUME procedure for SDT initiation (e.g., for first SDT transmission), the UE 801 re-establishes at least the SDT PDCP entities and resumes the SDT DRBs that are configured for small data transmission. According to this embodiment, the NW 803 may configure a different set of DRBs that the UE 801 shall resume for DL SDT, e.g., RRC-less SDT procedure triggered by the NW 803 for DL (MT), and Rel-17 SDT for UL (MO). In one example, the NW 803 configures for each radio bearer/logical channel the type of SDT bearer, e.g., UL SDT or DL SDT or both. Based on this configuration, the UE 801 is aware of which DRBs to resume upon initiation of the RRC-less SDT procedure.

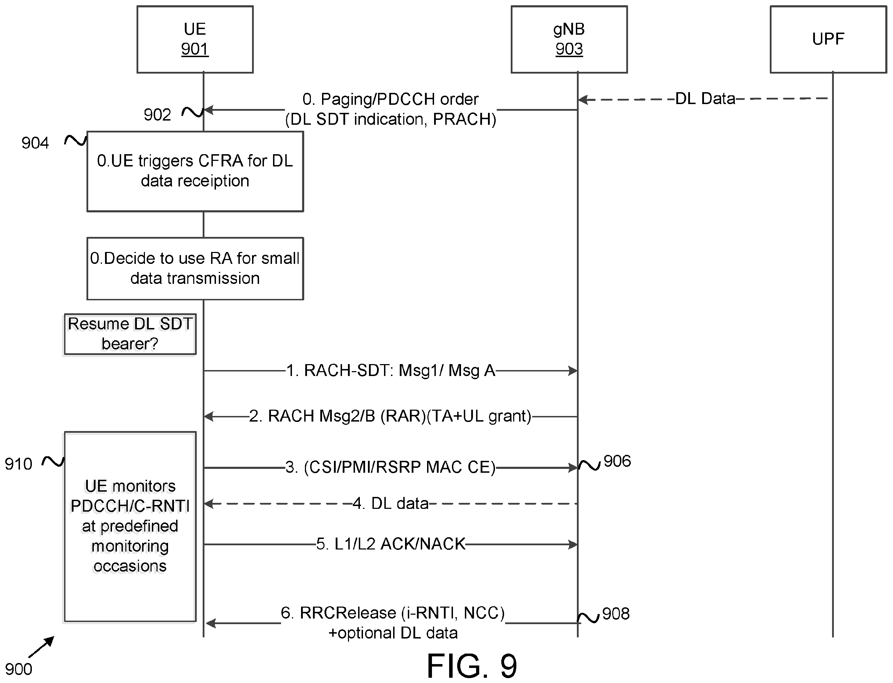

According to a further embodiment, shown in Figure 9, a network entity such as e.g., gNB 903 triggers a contention-free RACH-based SDT procedure to transmit downlink data to a UE 901 in RRC_INACTIVE state. According to one implementation of the embodiment, the NW 903 triggers the CFRA SDT procedure to transmit DL data to a UE 901 in RRC_INACTIVE state. In one example, the NW 903 triggers the CFRA SDT procedure for the purpose of DL transmission (MT) by means of a downlink message.

According to one implementation of the embodiment, the NW 903 sends (see messaging 902) a paging message to indicate to the UE 901 to trigger/start the CFRA SDT procedure for the purpose of DL (MT) data, e.g., DCI format 1_0 with P-RNTI and corresponding PDSCH. In one example, the paging message (PDSCH), e.g., paging record, includes some information that instructs the UE 901 to start the CFRA SDT procedure to receive some DL (MT) data in RRC_INACTIVE state. According to one specific implementation, the paging message includes a PRACH preamble that the UE 901 uses. In another example, a new downlink message is used to trigger (see block 904) the CFRA SDT procedure for the purpose of DL (MT) data transmission, e.g., PRACH preamble is contained in the new message. In one example, the new message may be a PDCCH addressed to the C-RNTI. In another example, the new message may be a PDSCH scheduled by a DCI (PDCCH) addressed to the C-RNTI of the UE 901 that should trigger UL SDT procedure for the purpose of DL (MT) data transmission/reception.

Upon reception of the CFRA SDT trigger/order message, the UE 901 starts (see block 904) the CFRA procedure with the allocated dedicated PRACH preamble. In one example, the PRACH occasion used by the UE 901 for the CFRA may be allocated by the NW 903, e.g., signaled within the SDT trigger/order message. The CFRA procedure serves the purpose of acknowledging the reception of the paging/SDT trigger message as well as aligning the uplink timing. According to one implementation of the embodiment, upon the successful completion of the CFRA, e.g., reception of random access response message, the UE starts monitoring (see block 910) PDCCH at specific predefined PDCCH monitoring occasions for the DL data reception, e.g., additional DCI monitoring occasions for DL reception. The UE 901 monitors PDCCH at the predefined additional PDCCH monitoring occasions and at the paging occasions (as in the legacy). In one example, the PRACH preamble sent by the UE 901 identifies the UE 901 and respectively verifies the identity of the UE 901. Alternatively, and according to another implementation of the embodiment, the UE 901 sends (see messaging 906) the I-RNTI/Resume-ID, e.g., MAC CE containing the I-RNT/Resume-ID, on UL message scheduled by RAR. In one example, the UE 901 uses the new security key (generated based on the received NCC value in the *RRCRelease* message (see messaging 908)), e.g., for ciphering, for the transmission of the UL message scheduled by the RAR. It is noted that other aspects described for the previous embodiments, e.g., resuming DL DRBs, sending CSI/RSRP/beam information, or the like are equally applicable to this embodiment as well.

The following technical details outlined in the various embodiments are summarized below. In a first embodiment, the NW triggers UL SDT procedure for the purpose of DL (MT) data transmission. A paging/SDT trigger message is used to order the SDT procedure in the UE. The paging indicates whether to use CG-SDT or RACH -SDT. Upon reception of this paging message with DL SDT, UE shall initiate UL SDT procedure even though there is no UL data in the UE buffer (virtual UL SDT procedure). A new Resume cause can be used if the indication in Paging message is for RACH-SDT; otherwise based on the CG-SDT resources, the network determines the cause. Access control (a new AS-based Access Identity and/ or category) can be used to initiate the UL procedure for this case.

In a second embodiment, a new SDT initiation procedure is disclosed for determining SDT/non-SDT. Different RSRP values for DL SDT are used since there is no need to transmit large TBs in the UL. RSRP_{DL-SDT} is used for comparison. A decision between CG-SDT and RACH-SDT is performed. For CG-SDT, beam where paging was received is used for determining CG-SDT resources. There is no need to repeat some RSRP measurements of SSBs. The UE sends "RRC resume request" plus some CSI/RSRP/beam information instead of UL data on the CG-SDT resources. *resumeCause* for this case is set to *mt-Access* or New *ResumeCause*. The UE is still resuming SDT-bearers but no BSR reporting and no PHR reporting needed. Same or different SDT bearers could be used for resuming for DL SDT and UL SDT. RRC configuration configures DL SDT bearer or UL SDT bearer or both. No PDCP status report is sent and the UL CG resources are autonomously deactivated in the UE after sending *RRCResumeRequest* message since there is no pending UL data (except ACK/NACK feedback). For the DL ACK/NACK on Uplink, the MAC CE can be used to acknowledge the DL data transmissions, e.g., no PUCCH resources. MAC CE could be transmitted on CG resources allocated by gNB or some dynamically scheduled PUSCH resources. PUCCH resources are configured (RRC release for DL SDT) and the UE activates it when starting UL or when receiving the first DL data or the paging that initiated the UL procedure. For RACH -SDT, in one embodiment, the UE sends "RRC resume request" plus some CSI/RSRP/beam information instead of UL data on the MsgA or Msg3. *resumeCause* for this case is set to *mt-Access* or New *ResumeCause*. The UE is still resuming SDT-bearers but no BSR reporting and no PHR reporting is needed. Same bearers resuming for DL SDT and UL SDT? Could be different SDT bearers. Same or different SDT bearers could be used for resuming for DL SDT and UL SDT. RRC configuration configures DL SDT bearer or UL SDT bearer or both. No PDCP status report is sent.

In a third embodiment, the NW indicates within the SDT trigger/paging message to trigger CFRA for the purpose of DL SDT. The UE starts CFRA in response to paging (paging indicates PRACH preamble) to ACK reception of paging and to align the UL timing. Upon successful completion of CFRA, the UE starts monitoring at specific predefined PDCCH monitoring occasions for the DL data reception, e.g., additional DCI monitoring occasions for DL reception (in additional to PO).

In a fourth embodiment, the UE receives a paging message or new SDT order (using PDCCH) with new indication (to start UL SDT for the purpose of DL and RRC-less is also indicated). The UE does not select between RACH SDT and CG SDT as in legacy procedures, e.g., in case TA is valid and UE has CG-SDT resources, UE uses CG-SDT. In response to the paging message, the UE sends only some "ACK" on CG-SDT, e.g., CSI/RSRP/PMI MAC CE to confirm reception of paging message.

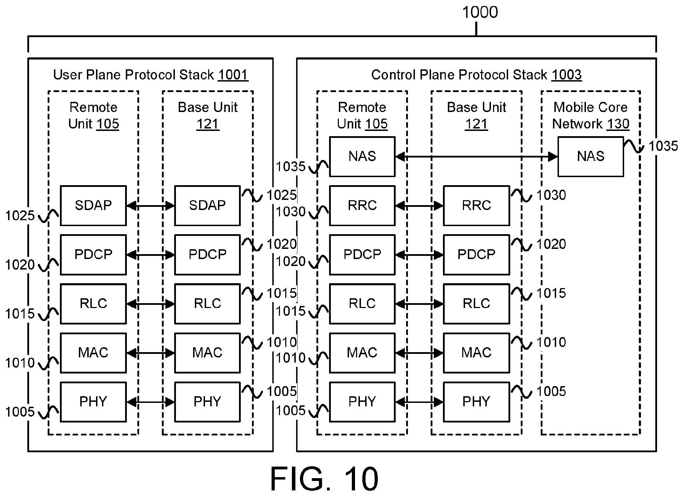

Figure 10 depicts a NR protocol stack 1000, according to embodiments of the disclosure. While Figure 10 shows the remote unit 105, the base unit 121 and the mobile core network 130, these are representative of a set of UEs interacting with a RAN node and a NF (e.g., AMF) in a core network. As depicted, the protocol stack 1000 comprises a User Plane protocol stack 1001 and a Control Plane protocol stack 1003. The User Plane protocol stack 1001 includes a physical ("PHY") layer 1005, a MAC sublayer 1010, an RLC sublayer 1015, a PDCP sublayer 1020, and Service Data Adaptation Protocol ("SDAP") layer 1025. The Control Plane protocol stack 1003 also includes a physical layer 1005, a MAC sublayer 1010, a RLC sublayer 1015, and a PDCP sublayer 1020. The Control Place protocol stack 1003 also includes an RRC layer and a Non-Access Stratum ("NAS") layer 1035.

The AS protocol stack for the Control Plane protocol stack 1003 consists of at least RRC, PDCP, RLC and MAC sublayers, and the physical layer. The AS protocol stack for the User Plane protocol stack 1001 consists of at least SDAP, PDCP, RLC and MAC sublayers, and the physical layer. The Layer-2 ("L2") is split into the SDAP, PDCP, RLC and MAC sublayers. The Layer-3 ("L3") includes the RRC sublayer 1030 and the NAS layer 1035 for the control plane and includes, e.g., an Internet Protocol ("IP") layer or PDU Layer (note depicted) for the user plane. L1 and L2 are referred to as "lower layers" such as PUCCH/PUSCH or MAC CE, while L3 and above (e.g., transport layer, application layer) are referred to as "higher layers" or "upper layers" such as RRC.

The physical layer 1005 offers transport channels to the MAC sublayer 1010. The MAC sublayer 1010 offers logical channels to the RLC sublayer 1015. The RLC sublayer 1015 offers RLC channels to the PDCP sublayer 1020. The PDCP sublayer 1020 offers radio bearers to the SDAP sublayer 1025 and/or RRC layer 1030. The SDAP sublayer 1025 offers QoS flows to the mobile core network 130 (e.g., 5GC). The RRC layer 1030 provides for the addition, modification, and release of Carrier Aggregation and/or Dual Connectivity. The RRC layer 1030 also manages the establishment, configuration, maintenance, and release of Signaling Radio Bearers ("SRBs") and Data Radio Bearers ("DRBs"). In certain embodiments, a RRC entity functions for detection of and recovery from radio link failure.

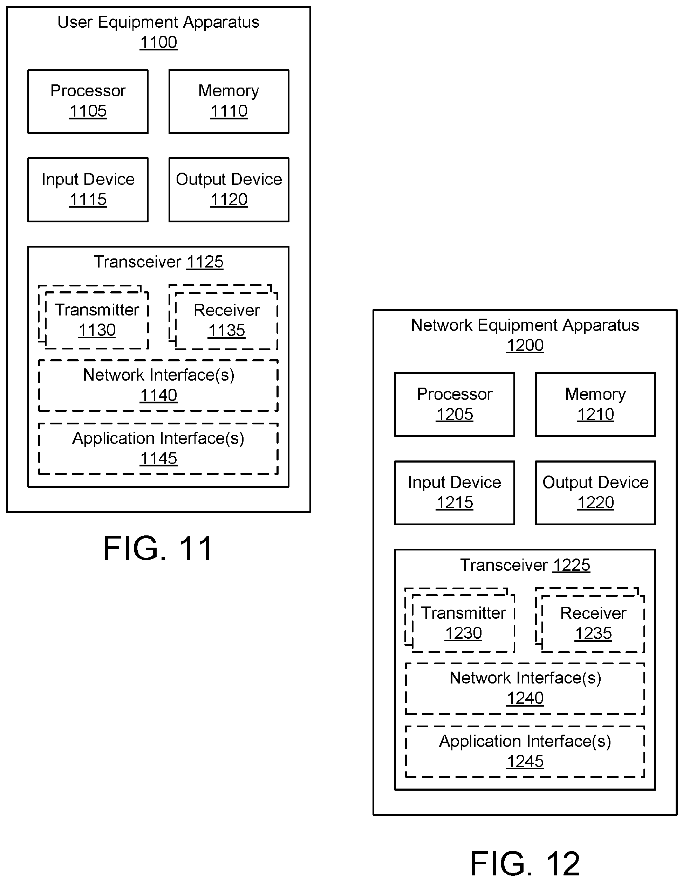

Figure 11 depicts a user equipment apparatus 1100 that may be used for DL transmission/reception procedure for SDTs, according to embodiments of the disclosure. In various embodiments, the user equipment apparatus 1100 is used to implement one or more of the solutions described above. The user equipment apparatus 1100 may be one embodiment of a UE, such as the remote unit 105 and/or the UE 205, as described above. Furthermore, the user equipment apparatus 1100 may include a processor 1105, a memory 1110, an input device 1115, an output device 1120, and a transceiver 1125. In some embodiments, the input device 1115 and the output device 1120 are combined into a single device, such as a touchscreen. In certain embodiments, the user equipment apparatus 1100 may not include any input device 1115 and/or output device 1120. In various embodiments, the user equipment apparatus 1100 may include one or more of: the processor 1105, the memory 1110, and the transceiver 1125, and may not include the input device 1115 and/or the output device 1120.

As depicted, the transceiver 1125 includes at least one transmitter 1130 and at least one receiver 1135. Here, the transceiver 1125 communicates with one or more base units 121. Additionally, the transceiver 1125 may support at least one network interface 1140 and/or application interface 1145. The application interface(s) 1145 may support one or more APIs. The network interface(s) 1140 may support 3GPP reference points, such as Uu and PC5. Other network interfaces 1140 may be supported, as understood by one of ordinary skill in the art.

The processor 1105, in one embodiment, may include any known controller capable of executing computer-readable instructions and/or capable of performing logical operations. For example, the processor 1105 may be a microcontroller, a microprocessor, a central processing unit ("CPU"), a graphics processing unit ("GPU"), an auxiliary processing unit, a field programmable gate array ("FPGA"), a digital signal processor ("DSP"), a co-processor, an application-specific processor, or similar programmable controller. In some embodiments, the processor 1105 executes instructions stored in the memory 1110 to perform the methods and routines described herein. The processor 1105 is communicatively coupled to the memory 1110, the input device 1115, the output device 1120, and the transceiver 1125. In certain embodiments, the processor 1105 may include an application processor (also known as "main processor") which manages application-domain and operating system ("OS") functions and a baseband processor (also known as "baseband radio processor") which manages radio functions.

The memory 1110, in one embodiment, is a computer readable storage medium. In some embodiments, the memory 1110 includes volatile computer storage media. For example, the memory 1110 may include a RAM, including dynamic RAM ("DRAM"), synchronous dynamic RAM ("SDRAM"), and/or static RAM ("SRAM"). In some embodiments, the memory 1110 includes non-volatile computer storage media. For example, the memory 1110 may include a hard disk drive, a flash memory, or any other suitable non-volatile computer storage device. In some embodiments, the memory 1110 includes both volatile and non-volatile computer storage media.

In some embodiments, the memory 1110 stores data related to CSI enhancements for higher frequencies. For example, the memory 1110 may store parameters, configurations, resource assignments, policies, and the like as described above. In certain embodiments, the memory 1110 also stores program code and related data, such as an operating system or other controller algorithms operating on the user equipment apparatus 1100, and one or more software applications.

The input device 1115, in one embodiment, may include any known computer input device including a touch panel, a button, a keyboard, a stylus, a microphone, or the like. In some embodiments, the input device 1115 may be integrated with the output device 1120, for example, as a touchscreen or similar touch-sensitive display. In some embodiments, the input device 1115 includes a touchscreen such that text may be input using a virtual keyboard displayed on the touchscreen and/or by handwriting on the touchscreen. In some embodiments, the input device 1115 includes two or more different devices, such as a keyboard and a touch panel.

The output device 1120, in one embodiment, is designed to output visual, audible, and/or haptic signals. In some embodiments, the output device 1120 includes an electronically controllable display or display device capable of outputting visual data to a user. For example, the output device 1120 may include, but is not limited to, an LCD display, an LED display, an OLED display, a projector, or similar display device capable of outputting images, text, or the like to a user. As another, non-limiting, example, the output device 1120 may include a wearable display separate from, but communicatively coupled to, the rest of the user equipment apparatus 1100, such as a smart watch, smart glasses, a heads-up display, or the like. Further, the output device 1120 may be a component of a smart phone, a personal digital assistant, a television, a table computer, a notebook (laptop) computer, a personal computer, a vehicle dashboard, or the like.

In certain embodiments, the output device 1120 includes one or more speakers for producing sound. For example, the output device 1120 may produce an audible alert or notification (e.g., a beep or chime). In some embodiments, the output device 1120 includes one or more haptic devices for producing vibrations, motion, or other haptic feedback. In some embodiments, all, or portions of the output device 1120 may be integrated with the input device 1115. For example, the input device 1115 and output device 1120 may form a touchscreen or similar touch-sensitive display. In other embodiments, the output device 1120 may be located near the input device 1115.

The transceiver 1125 includes at least transmitter 1130 and at least one receiver 1135. The transceiver 1125 may be used to provide UL communication signals to a base unit 121 and to receive DL communication signals from the base unit 121, as described herein. Similarly, the transceiver 1125 may be used to transmit and receive SL signals (e.g., V2X communication), as described herein. Although only one transmitter 1130 and one receiver 1135 are illustrated, the user equipment apparatus 1100 may have any suitable number of transmitters 1130 and receivers 1135. Further, the transmitter(s) 1130 and the receiver(s) 1135 may be any suitable type of transmitters and receivers. In one embodiment, the transceiver 1125 includes a first transmitter/receiver pair used to communicate with a mobile communication network over licensed radio spectrum and a second transmitter/receiver pair used to communicate with a mobile communication network over unlicensed radio spectrum.

In certain embodiments, the first transmitter/receiver pair used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. In some embodiments, the first transmitter/receiver pair and the second transmitter/receiver pair may share one or more hardware components. For example, certain transceivers 1125, transmitters 1130, and receivers 1135 may be implemented as physically separate components that access a shared hardware resource and/or software resource, such as for example, the network interface 1140.

In various embodiments, one or more transmitters 1130 and/or one or more receivers 1135 may be implemented and/or integrated into a single hardware component, such as a multi-transceiver chip, a system-on-a-chip, an ASIC, or other type of hardware component. In certain embodiments, one or more transmitters 1130 and/or one or more receivers 1135 may be implemented and/or integrated into a multi-chip module. In some embodiments, other components such as the network interface 1140 or other hardware components/circuits may be integrated with any number of transmitters 1130 and/or receivers 1135 into a single chip. In such embodiment, the transmitters 1130 and receivers 1135 may be logically configured as a transceiver 1125 that uses one more common control signals or as modular transmitters 1130 and receivers 1135 implemented in the same hardware chip or in a multi-chip module.

In one embodiment, the processor 1105 receives, via the transceiver 1125, a PDSCH transmission from a network, the PDSCH transmission associated with a PDCCH transmission that is received at a preconfigured PDCCH monitoring occasion, the PDSCH comprising an SDT indicator. In one embodiment, the processor 1105 initiates, in response to receiving the SDT indicator, an SDT procedure by transmitting, to the network, an RRC signaling message and downlink related control information on a preconfigured configured uplink grant resource.

In one embodiment, the preconfigured PDCCH monitoring occasion is a paging occasion of the apparatus.

In one embodiment, the indicator indicates to the apparatus to initiate a SDT procedure to provide downlink related control information to receive downlink data. In one embodiment, the downlink related control information is comprised of CSI, a RSRP value, beam-related information, or a combination thereof.

In one embodiment, the processor 1105 transmits, via the transceiver 1125, the downlink related control information within a new MAC CE.

In one embodiment, the processor 1105 does to not report BSR or PHR to the network during the SDT procedure even if the apparatus is configured with a BSR configuration or a PHR configuration.

In one embodiment, the processor 1105 deactivates the configured grant resources in response to successfully transmitting the RRC signaling message and the downlink related control information.

In one embodiment, the SDT procedure comprises one of a CG SDT procedure and a RACH SDT procedure.

In one embodiment, the processor 11105 applies different RSRP thresholds to select the SDT procedure.

In one embodiment, in response to the SDT procedure comprising a RACH SDT procedure, the processor is configured to cause the apparatus to transmit the RRC signaling message on a RACH message.

In one embodiment, the processor 1105 sets *ResumeCause* for the RRC signal message to *mt-Access* or set *ResumeCause* to a value indicating that the SDT procedure was triggered by the network.

In one embodiment, the processor 1105 does not perform carrier selection in response to the SDT procedure and to consider a NUL carrier for SDT resource selection.

In one embodiment, the processor 1105 selects configured grant SDT resources that are mapped to a beam on which the SDT indicator was received.

Figure 12 depicts one embodiment of a network apparatus 1200 that may be used for DL transmission/reception procedure for SDTs, according to embodiments of the disclosure. In some embodiments, the network apparatus 1200 may be one embodiment of a RAN node and its supporting hardware, such as the base unit 121 and/or gNB, described above. Furthermore, network apparatus 1200 may include a processor 1205, a memory 1210, an input device 1215, an output device 1220, and a transceiver 1225. In certain embodiments, the network apparatus 1200 does not include any input device 1215 and/or output device 1220.

As depicted, the transceiver 1225 includes at least one transmitter 1230 and at least one receiver 1235. Here, the transceiver 1225 communicates with one or more remote units 105. Additionally, the transceiver 1225 may support at least one network interface 1240 and/or application interface 1245. The application interface(s) 1245 may support one or more APIs. The network interface(s) 1240 may support 3GPP reference points, such as Uu, N1, N2, N3, N5, N6 and/or N7 interfaces. Other network interfaces 1240 may be supported, as understood by one of ordinary skill in the art.

When implementing an NEF, the network interface(s) 1240 may include an interface for communicating with an application function (i.e., N5) and with at least one network function (e.g., UDR, SFC function, UPF) in a mobile communication network, such as the mobile core network 130.

The processor 1205, in one embodiment, may include any known controller capable of executing computer-readable instructions and/or capable of performing logical operations. For example, the processor 1205 may be a microcontroller, a microprocessor, a CPU, a GPU, an auxiliary processing unit, an FPGA, a DSP, a co-processor, an application-specific processor, or similar programmable controller. In some embodiments, the processor 1205 executes instructions stored in the memory 1210 to perform the methods and routines described herein. The processor 1205 is communicatively coupled to the memory 1210, the input device 1215, the output device 1220, and the transceiver 1225. In certain embodiments, the processor 1205 may include an application processor (also known as "main processor") which manages application-domain and OS functions and a baseband processor (also known as "baseband radio processor") which manages radio function. In various embodiments, the processor 1205 controls the network apparatus 1200 to implement the above described network entity behaviors (e.g., of the gNB) for downlink transmission/reception procedure for small data transmissions in RRC_INACTIVE.

The memory 1210, in one embodiment, is a computer readable storage medium. In some embodiments, the memory 1210 includes volatile computer storage media. For example, the memory 1210 may include a RAM, including DRAM, SDRAM, and/or SRAM. In some embodiments, the memory 1210 includes non-volatile computer storage media. For example, the memory 1210 may include a hard disk drive, a flash memory, or any other suitable non-volatile computer storage device. In some embodiments, the memory 1210 includes both volatile and non-volatile computer storage media.

In some embodiments, the memory 1210 stores data relating to CSI enhancements for higher frequencies. For example, the memory 1210 may store parameters, configurations, resource assignments, policies, and the like as described above. In certain embodiments, the memory 1210 also stores program code and related data, such as an OS or other controller algorithms operating on the network apparatus 1200, and one or more software applications.

The input device 1215, in one embodiment, may include any known computer input device including a touch panel, a button, a keyboard, a stylus, a microphone, or the like. In some embodiments, the input device 1215 may be integrated with the output device 1220, for example, as a touchscreen or similar touch-sensitive display. In some embodiments, the input device 1215 includes a touchscreen such that text may be input using a virtual keyboard displayed on the touchscreen and/or by handwriting on the touchscreen. In some embodiments, the input device 1215 includes two or more different devices, such as a keyboard and a touch panel.

The output device 1220, in one embodiment, may include any known electronically controllable display or display device. The output device 1220 may be designed to output visual, audible, and/or haptic signals. In some embodiments, the output device 1220 includes an electronic display capable of outputting visual data to a user. Further, the output device 1220 may be a component of a smart phone, a personal digital assistant, a television, a table computer, a notebook (laptop) computer, a personal computer, a vehicle dashboard, or the like.

In certain embodiments, the output device 1220 includes one or more speakers for producing sound. For example, the output device 1220 may produce an audible alert or notification (e.g., a beep or chime). In some embodiments, the output device 1220 includes one or more haptic devices for producing vibrations, motion, or other haptic feedback. In some embodiments, all, or portions of the output device 1220 may be integrated with the input device 1215. For example, the input device 1215 and output device 1220 may form a touchscreen or similar touch-sensitive display. In other embodiments, all, or portions of the output device 1220 may be located near the input device 1215.

As discussed above, the transceiver 1225 may communicate with one or more remote units and/or with one or more interworking functions that provide access to one or more PLMNs. The transceiver 1225 may also communicate with one or more network functions (e.g., in the mobile core network 80). The transceiver 1225 operates under the control of the processor 1205 to transmit messages, data, and other signals and also to receive messages, data, and other signals. For example, the processor 1205 may selectively activate the transceiver (or portions thereof) at particular times in order to send and receive messages.

The transceiver 1225 may include one or more transmitters 1230 and one or more receivers 1235. In certain embodiments, the one or more transmitters 1230 and/or the one or more receivers 1235 may share transceiver hardware and/or circuitry. For example, the one or more transmitters 1230 and/or the one or more receivers 1235 may share antenna(s), antenna tuner(s), amplifier(s), filter(s), oscillator(s), mixer(s), modulator/demodulator(s), power supply, and the like. In one embodiment, the transceiver 1225 implements multiple logical transceivers using different communication protocols or protocol stacks, while using common physical hardware.

In one embodiment, the processor 1205 is configured to transmit, via the transceiver 1225, a PDSCH transmission to a UE, the PDSCH transmission associated with a PDCCH transmission that is received at a preconfigured PDCCH monitoring occasion, the PDSCH comprising a SDT indicator. In one embodiment, the processor 1205 is configured to receive, via the transceiver 1225, from the UE, an RRC signaling message and downlink related control information on a preconfigured configured uplink grant resource using an SDT procedure based on the SDT indicator.

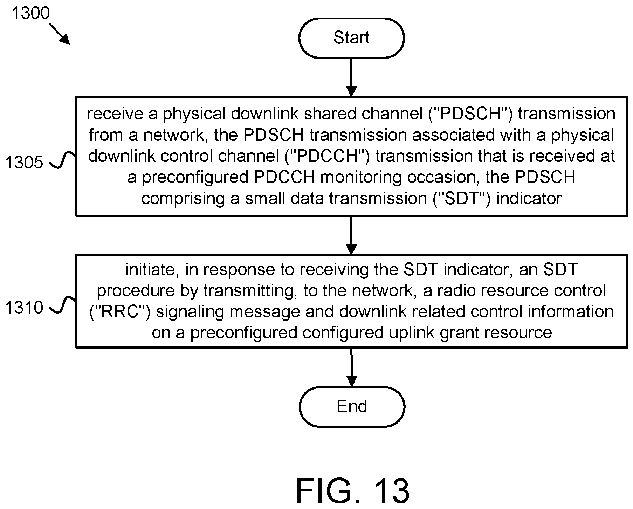

Figure 13 is a flowchart diagram of a method 1300 for DL transmission/reception procedure for SDTs. The method 1300 may be performed by a UE as described herein, for example, the remote unit 105 and/or the user equipment apparatus 1100. In some embodiments, the method 1300 may be performed by a processor executing program code, for example, a microcontroller, a microprocessor, a CPU, a GPU, an auxiliary processing unit, a FPGA, or the like.

In one embodiment, the method 1300 begins and receives 1305 a PDSCH transmission from a network, the PDSCH transmission associated with a PDCCH transmission that is received at a preconfigured PDCCH monitoring occasion, the PDSCH comprising a SDT indicator. In one embodiment, the method 1300 initiates 1310, in response to receiving the SDT indicator, an SDT procedure by transmitting, to the network, an RRC signaling message and downlink related control information on a preconfigured configured uplink grant resource, and the method 1300 ends.

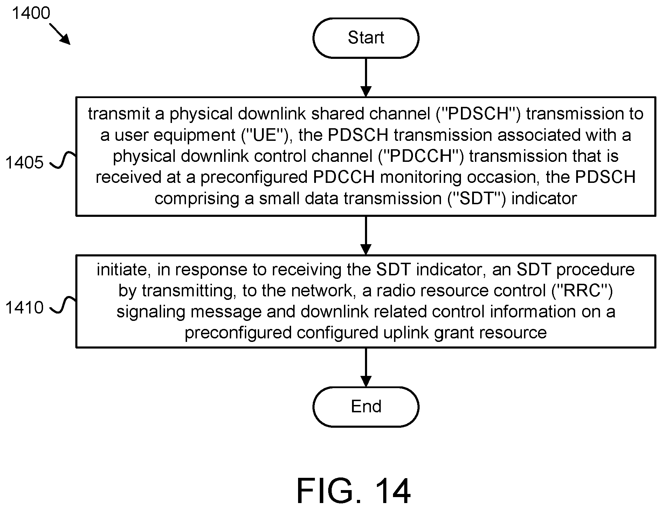

Figure 14 is a flowchart diagram of a method 1400 for DL transmission/reception procedure for SDTs. The method 1400 may be performed by a network entity as described herein, for example, a gNB, a base unit 121, and/or the network equipment apparatus 1200. In some embodiments, the method 1400 may be performed by a processor executing program code, for example, a microcontroller, a microprocessor, a CPU, a GPU, an auxiliary processing unit, a FPGA, or the like.

In one embodiment, the method 1400 begins and transmits 1405 a PDSCH transmission to a UE, the PDSCH transmission associated with a PDCCH transmission that is received at a preconfigured PDCCH monitoring occasion, the PDSCH comprising a SDT indicator. In one embodiment, the method 1400 receives 1410, from the UE, an RRC signaling message and downlink related control information on a preconfigured configured uplink grant resource using an SDT procedure based on the SDT indicator, and the method 1400 ends.

A first apparatus is disclosed for DL transmission/reception procedure for SDTs. The first apparatus may include a UE as described herein, for example, the remote unit 105 and/or the user equipment apparatus 1100. In some embodiments, the first apparatus may include a processor executing program code, for example, a microcontroller, a microprocessor, a CPU, a GPU, an auxiliary processing unit, a FPGA, or the like.

In one embodiment, the first apparatus includes a transceiver and a processor coupled to the transceiver. In one embodiment, the processor is configured to cause the apparatus to receive a PDSCH transmission from a network, the PDSCH transmission associated with a PDCCH transmission that is received at a preconfigured PDCCH monitoring occasion, the PDSCH comprising an SDT indicator. In one embodiment, the processor is configured to cause the apparatus to initiate, in response to receiving the SDT indicator, an SDT procedure by transmitting, to the network, an RRC signaling message and downlink related control information on a preconfigured configured uplink grant resource.

In one embodiment, the preconfigured PDCCH monitoring occasion is a paging occasion of the apparatus.

In one embodiment, the indicator indicates to the apparatus to initiate a SDT procedure to provide downlink related control information to receive downlink data. In one embodiment, the downlink related control information is comprised of CSI, a RSRP value, beam-related information, or a combination thereof.

In one embodiment, the processor is configured to cause the apparatus to transmit the downlink related control information within a new MAC CE.

In one embodiment, the processor is configured to cause the apparatus to not report BSR or PHR to the network during the SDT procedure even if the apparatus is configured with a BSR configuration or a PHR configuration.

In one embodiment, the processor is configured to cause the apparatus to deactivate the configured grant resources in response to successfully transmitting the RRC signaling message and the downlink related control information.

In one embodiment, the SDT procedure comprises one of a CG SDT procedure and a RACH SDT procedure.

In one embodiment, the processor is configured to cause the apparatus to apply different RSRP thresholds to select the SDT procedure.

In one embodiment, in response to the SDT procedure comprising a RACH SDT procedure, the processor is configured to cause the apparatus to transmit the RRC signaling message on a RACH message.

In one embodiment, the processor is configured to cause the apparatus to set *ResumeCause* for the RRC signal message to *mt-Access* or set *ResumeCause* to a value indicating that the SDT procedure was triggered by the network.

In one embodiment, the processor is configured to cause the apparatus to not perform carrier selection in response to the SDT procedure and to consider a NUL carrier for SDT resource selection.

In one embodiment, the processor is configured to cause the apparatus to select configured grant SDT resources that are mapped to a beam on which the SDT indicator was received.

A first method is disclosed for DL transmission/reception procedure for SDTs. The first method may be performed by a UE as described herein, for example, the remote unit 105 and/or the user equipment apparatus 1100. In some embodiments, the first method may be performed by a processor executing program code, for example, a microcontroller, a microprocessor, a CPU, a GPU, an auxiliary processing unit, a FPGA, or the like.

In one embodiment, the first method receives a PDSCH transmission from a network, the PDSCH transmission associated with a PDCCH transmission that is received at a preconfigured PDCCH monitoring occasion, the PDSCH comprising an SDT indicator. In one embodiment, the first method initiates, in response to receiving the SDT indicator, an SDT procedure by transmitting, to the network, an RRC signaling message and downlink related control information on a preconfigured configured uplink grant resource.

In one embodiment, the preconfigured PDCCH monitoring occasion is a paging occasion of the apparatus.

In one embodiment, the indicator indicates to the apparatus to initiate a SDT procedure to provide downlink related control information to receive downlink data. In one embodiment, the downlink related control information is comprised of CSI, a RSRP value, beam-related information, or a combination thereof.

In one embodiment, the first method transmits the downlink related control information within a new MAC CE.

In one embodiment, the first method does not report BSR or PHR to the network during the SDT procedure even if the apparatus is configured with a BSR configuration or a PHR configuration.

In one embodiment, the first method deactivates the configured grant resources in response to successfully transmitting the RRC signaling message and the downlink related control information.

In one embodiment, the SDT procedure comprises one of a CG SDT procedure and a RACH SDT procedure.

In one embodiment, the first method applies different RSRP thresholds to select the SDT procedure.

In one embodiment, in response to the SDT procedure comprising a RACH SDT procedure, the processor is configured to cause the apparatus to transmit the RRC signaling message on a RACH message.

In one embodiment, the first method sets *ResumeCause* for the RRC signal message to *mt-Access* or set *ResumeCause* to a value indicating that the SDT procedure was triggered by the network.

In one embodiment, the first method does not perform carrier selection in response to the SDT procedure and to consider a NUL carrier for SDT resource selection.

In one embodiment, the first method selects configured grant SDT resources that are mapped to a beam on which the SDT indicator was received.

A second apparatus is disclosed for DL transmission/reception procedure for SDTs. The second apparatus may include a network entity as described herein, for example, a gNB, a base unit 121, and/or the network equipment apparatus 1200. In some embodiments, the second apparatus may include a processor executing program code, for example, a microcontroller, a microprocessor, a CPU, a GPU, an auxiliary processing unit, a FPGA, or the like.

In one embodiment, the second apparatus includes a transceiver and a processor coupled to the transceiver. In one embodiment, the processor is configured to cause the apparatus to transmit a PDSCH transmission to a UE, the PDSCH transmission associated with a PDCCH transmission that is received at a preconfigured PDCCH monitoring occasion, the PDSCH comprising a SDT indicator. In one embodiment, the processor is configured to cause the apparatus to receive, from the UE, an RRC signaling message and downlink related control information on a preconfigured configured uplink grant resource using an SDT procedure based on the SDT indicator.

A second method is disclosed for DL transmission/reception procedure for SDTs. The second method may be performed by a network entity as described herein, for example, a gNB, a base unit 121, and/or the network equipment apparatus 1200. In some embodiments, the second method may be performed by a processor executing program code, for example, a microcontroller, a microprocessor, a CPU, a GPU, an auxiliary processing unit, a FPGA, or the like.

In one embodiment, the second method transmits a PDSCH transmission to a UE, the PDSCH transmission associated with a PDCCH transmission that is received at a preconfigured PDCCH monitoring occasion, the PDSCH comprising a SDT indicator. In one embodiment, the second method receives, from the UE, an RRC signaling message and downlink related control information on a preconfigured configured uplink grant resource using an SDT procedure based on the SDT indicator.

Further aspects of the invention are provided by the subject matter of the following numbered clauses.

Clause 1. A user equipment ("UE") apparatus, comprising: a transceiver; and a processor coupled to the transceiver, the processor configured to cause the apparatus to: receive a physical downlink shared channel ("PDSCH") transmission from a network, the PDSCH transmission associated with a physical downlink control channel ("PDCCH") transmission that is received at a preconfigured PDCCH monitoring occasion, the PDSCH comprising a small data transmission ("SDT") indicator; and initiate, in response to receiving the SDT indicator, an SDT procedure by transmitting, to the network, a radio resource control ("RRC") signaling message and downlink related control information on a preconfigured configured uplink grant resource.

Clause 2. The apparatus of clause 1, wherein the preconfigured PDCCH monitoring occasion is a paging occasion of the apparatus.

Clause 3. The apparatus of clause 1, wherein the indicator indicates to the apparatus to initiate a SDT procedure to provide downlink related control information to receive downlink data.

Clause 4. The apparatus of clause 3, wherein the downlink related control information is comprised of channel state information ("CSI"), a reference signal received power ("RSRP") value, beam-related information, or a combination thereof.

Clause 5. The apparatus of clause 3, wherein the processor is configured to cause the apparatus to transmit the downlink related control information within a new medium access control control element ("MAC CE").

Clause 6. The apparatus of clause 1, wherein the processor is configured to cause the apparatus to not report buffer status information ("BSR") or power headroom information ("PHR") to the network during the SDT procedure even if the apparatus is configured with a BSR configuration or a PHR configuration.

Clause 7. The apparatus of clause 1, wherein the processor is configured to cause the apparatus to deactivate the configured grant resources in response to successfully transmitting the RRC signaling message and the downlink related control information.

Clause 8. The apparatus of clause 1, wherein the SDT procedure comprises one of a configured grant ("CG") SDT procedure and a random access channel ("RACH") SDT procedure.

Clause 9. The apparatus of clause 8, wherein the processor is configured to cause the apparatus to apply different reference signal received power ("RSRP") thresholds to select the SDT procedure.

Clause 10. The apparatus of clause 8, wherein, in response to the SDT procedure comprising a RACH SDT procedure, the processor is configured to cause the apparatus to transmit the RRC signaling message on a RACH message.

Clause 11. The apparatus of clause 1, wherein the processor is configured to cause the apparatus to set ResumeCause for the RRC signal message to mt-Access or set ResumeCause to a value indicating that the SDT procedure was triggered by the network.

Clause 12. The apparatus of clause 1, wherein the processor is configured to cause the apparatus to not perform carrier selection in response to the SDT procedure and to consider a NUL carrier for SDT resource selection.

Clause 13. The apparatus of clause 1, wherein the processor is configured to cause the apparatus to select configured grant SDT resources that are mapped to a beam on which the SDT indicator was received.

Clause 14. A method of a user equipment ("UE") apparatus, the method comprising: receiving a physical downlink shared channel ("PDSCH") transmission from a network, the PDSCH transmission associated with a physical downlink control channel ("PDCCH") transmission that is received at a preconfigured PDCCH monitoring occasion, the PDSCH comprising a small data transmission ("SDT") indicator; and initiating, in response to receiving the SDT indicator, an SDT procedure by transmitting, to the network, a radio resource control ("RRC") signaling message and downlink related control information on a preconfigured configured uplink grant resource.

Clause 15. A network equipment apparatus, comprising: a transceiver; and a processor coupled to the transceiver, the processor configured to cause the apparatus to: transmit a physical downlink shared channel ("PDSCH") transmission to a user equipment ("UE"), the PDSCH transmission associated with a physical downlink control channel ("PDCCH") transmission that is received at a preconfigured PDCCH monitoring occasion, the PDSCH comprising a small data transmission ("SDT") indicator; and receive, from the UE, a radio resource control ("RRC") signaling message and downlink related control information on a preconfigured configured uplink grant resource using an SDT procedure based on the SDT indicator.

Embodiments may be practiced in other specific forms. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A user equipment, UE, (1100), comprising:
at least one memory (1110); and
at least one processor (1105) coupled with the at least one memory (1110) and configured to cause the UE (1100) to:
receive a paging message comprising an indication to initiate a small data transmission, SDT, procedure;
receive one or more reference signal received power, RSRP, thresholds; and
determine whether to initiate, in response to receiving the indication, the SDT procedure based at least in part on the one or more RSRP thresholds.

2. The UE (1100) of claim 1, wherein the at least one processor (1105) is configured to cause the UE (1100) to receive the paging message on a physical downlink control channel, PDCCH, monitoring occasion.

3. The UE (1100) of any preceding claim, wherein the at least one processor (1105) is configured to cause the UE (1100) to receive downlink data while in an inactive state in response to initiating the SDT procedure.

4. The UE (1100) of any preceding claim, wherein the at least one processor (1105) is configured to cause the UE (1100) to receive the one or more RSRP thresholds on a broadcast channel.

5. The UE (1100) of any preceding claim, wherein the at least one processor (1105) is configured to cause the UE (1100) to receive the one or more RSRP thresholds within a radio resource control, RRC, message.

6. The UE (1100) of any preceding claim, wherein the at least one processor (1105) is configured to cause the UE (1100) to apply a different RSRP threshold to the SDT procedure triggered by the paging message than a different SDT procedure triggered by the UE (1100).

7. The UE (1100) of any preceding claim, wherein the at least one processor (1105) is configured to cause the UE (1100) to set a RRC resume cause to a value representing an indication that the SDT procedure is initiated based on the received paging message.

8. The UE (1100) of any preceding claim, wherein the at least one processor (1105) is configured to cause the UE (1100) to set a RRC resume cause to a value representing a mobile terminal access, mt-Access. indication in an RRC resume request message.

9. The UE (1100) of any preceding claim, wherein the SDT procedure comprises one of a configured grant, CG, SDT procedure and a random access channel, RACH, SDT procedure.

10. A method of a user equipment, UE, (1100), comprising:
receiving a paging message comprising an indication to initiate a small data transmission, SDT, procedure;
receiving one or more reference signal received power, RSRP, thresholds; and
determining whether to initiate, in response to receiving the indication, the SDT procedure based at least in part on the one or more RSRP thresholds.

11. A network equipment, NE, (1200), comprising:
at least one memory (1210); and
at least one processor (1205) coupled with the at least one memory (1210) and configured to cause the NE (1200) to:
transmit a paging message comprising an indication to initiate a small data transmission, SDT, procedure;
transmit one or more reference signal received power, RSRP, thresholds; and
receive a radio resource control, RRC, message indicating that the SDT procedure is initiated.

12. The NE (1200) of claim 11, wherein the at least one processor (1205) is configured to cause the NE (1200) to transmit the paging message on a physical downlink control channel, PDCCH, monitoring occasion.

13. The NE (1200) of claim 11 or claim 12, wherein the at least one processor (1205) is configured to cause the NE (1200) to transmit the one or more RSRP thresholds within a radio resource control, RRC, message.

14. The NE (1200) of any one of claims 11 to 13, wherein the SDT procedure comprises one of a configured grant, CG, SDT procedure and a random access channel, RACH, SDT procedure.

15. A method of a network equipment, NE, (1200), comprising:
transmitting a paging message comprising an indication to initiate a small data transmission, SDT, procedure;
transmitting one or more reference signal received power, RSRP, thresholds; and
receiving a radio resource control, RRC, message indicating that the SDT procedure is initiated.
